# EUROPEAN PATENT SPECIFICATION

(11) **EP 2 887 139 B1**
(45) Date of publication and mention of the grant of the patent: **03.10.2018**
(21) Application number: 13831377.0
(22) Date of filing: 11.03.2013
(51) Int. Cl.: G03B 11/06, G03B 11/04, H04N 5/225

(54) **DEVICE FOR COVERING THE LENS OF A DIGITAL CAMERA BUILT INTO AN ELECTRONIC APPARATUS SUCH AS A PERSONAL COMPUTER OR A SIMILAR APPARATUS HAVING MULTIMEDIA TRANSMISSION CAPABILITIES**
VORRICHTUNG ZUR ABDECKUNG DER LINSE EINER DIGITALEN KAMERA IN EINER ELEKTRONISCHEN VORRICHTUNG WIE EINEM PERSONALCOMPUTER ODER EINER ÄHNLICHEN VORRICHTUNG MIT MULTIMEDIA-ÜBERTRAGUNGSFÄHIGKEITEN
DISPOSITIF SERVANT À COUVRIR L'OBJECTIF DE CAMÉRAS NUMÉRIQUES INTÉGRÉES DANS UN APPAREIL ÉLECTRONIQUE TEL QU'UN ORDINATEUR PERSONNEL OU UN APPAREIL SIMILAIRE À CAPACITÉ DE TRANSMISSION MULTIMÉDIA

(30) Priority: 20.08.2012 ES 201200768; 20.08.2012 ES 201200769; 12.09.2012 ES 201200827; 24.09.2012 ES 201200860; 19.12.2012 ES 201201135; 28.02.2013 ES 201300179
(43) Date of publication of application: 24.06.2015
(73) Proprietor: O&C Innovacion y Desarrollo S.L., 28669 Boadilla Del Monte (Madrid) (ES)
(72) Inventor: OLIVENCIA CEREZO, Guillermo, E-28669 Boadilla Del Monte (Madrid) (ES)
(74) Representative: de Arpe Fernandez, Manuel
(86) International application number: PCT/ES2013/070151
(87) International publication number: WO 2014/029897

(56) References cited:
- DE-U1-202009 014 628
- DE-U1-202011 106 305
- DE-U1-202011 108 976
- US-A- 5 805 947
- US-A1- 2010 309 369

## Description

A device for covering the lens of digital cameras incorporated into electronic appliances, such as personal computers or similar devices with multimedia transmission capabilities

### Field of the Invention

The present invention relates to a device aimed at preventing the possibility of being watched without the consent of the user through the digital camera of a PC, even though the image capturing function of the camera is not disabled, and that may be also applied to any other kind of electronic device incorporating a built-in camera with multimedia transmission capabilities, such as laptop computers, tablets and even smartphones.

### Background of the invention

Some integrated devices are already known in the market, aimed at preventing the unauthorised watching of a digital camera incorporated into a PC or any other audiovisual devices. However, although they are effective, they have the disadvantage that they cannot be applied to those computers that do not incorporate them by default, and consequently, they could become the object of undesired prying eyes, if the user has not disabled the image capturing and transmission function.

Thus, the technical problem posed would be to provide an accessory which can be easily incorporated into any existing equipment which does not have such a device by default, and which allows to prevent the capturing of images without the consent of the user.

DE 20 2011 106305 U1 and US 2010/309369 discloses devices according to the preamble of claim 1. These documents neither mentions nor suggest, the possibility that the closing means are provided as an element sliding on the frame by means of a guiding rail system comprising stops to prevent that the closing means may go off the frame element.

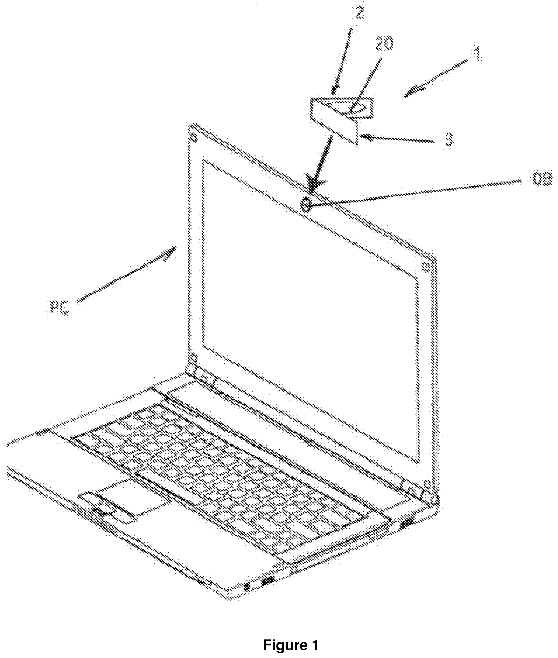

DE 20 2009 014628, discloses other device according to the preamble of claim 1. Furthermore, and as shown in figures 1 to 4 thereof, the device (1) comprises a frame (2) and closing means (3) with an elongated part (16) which is practically the same size as the length of the frame (2), the closing means (3) is arranged so that it can be moved lengthwise along a guiding slot (15) of the frame (2).

Moreover, it can be appreciated that a central straight-through notch (12) has been arranged on the frame (2) and that the said frame (2) shows respective end portions (13, 14) ending in straight edges respectively facing each other, seen from the central part of the device (1). In other words, the end portions (13, 14) determine a quadrangular recess on the central lower part of the frame (2).

It can be also appreciated that the lower part of the closing means (3) comprises a plate-shaped element (17) which straddles both sides of the elongated part (16) and shows, on the one hand, upper sliding surfaces (24, 25) resting on the lower part of the longitudinal sides (10, 11) of the frame (2), and on the other hand, front and rear edges (18, 19) [in the moving direction of the closing means] that butt against the respective straight edge of the end portions (13, 14) of the frame (2) when the closing means (3) slide longitudinally along the said frame (2).

This structure entails an assembly problem: indeed, in order to attach the closing means (3) on the frame (2) to obtain a sliding coupling, it is necessary to introduce the plate-shaped element (17) of the closing means (3) along the straight through central notch (12) of the frame (2), and since the transverse size of the plate-shaped element (17) (perpendicular to the direction of movement) is greater than the transverse size of the straight-through notch (12), the said plate element (17), must therefore be flexible enough so that, on the one hand, its side edges may be temporarily deformed, allowing them to pass through the said straight-through notch (12) and, on the other hand, they may subsequently recover their initial position, resting with the upper sliding surfaces (24, 25) against the lower part of the longitudinal sides (10, 11) of the frame (2). Another additional or alternative possibility would be that the frame (2) is flexible enough to allow the deformation of the central notch (12), although the assembly operation would also be difficult.

Furthermore, this flexibility of the material used, either for the frame, the closing means or both, represents a restriction, as far as the selection of the constituent material is concerned, that may represent additional costs and restrict the design choices.

### Summary of the Invention

According to the state of the art which has been mentioned above, the object sought by the invention would be the development of a device of the aforementioned type, which can be used to easily cover the lens of a digital camera integrated in an electronic apparatus, such as a laptop or desktop personal computer, a multimedia tablet or even a smartphone.

This objective is achieved by means of the characteristics mentioned in claim 1. Other objectives and advantages will become apparent from the characteristics mentioned in the dependent claims.

To that effect, a device is provided, wherein such device is intended as an accessory that can be tightly inserted on the body of the electronic apparatus, over the lens of a digital camera incorporated into such electronic apparatus, such device comprising:
- a frame element wherein an opening/window has been provided, which delimits an opening; and
- closing means, comprised by an essentially opaque material, that are fitted on the frame element so that they may switch between a closing position, covering the opening/window, and an opening position, uncovering such opening/window so that the camera lens may be covered/uncovered at the user's will.

According to an additional characteristic of the invention, and to allow that the device may be easily fixed on the electronic apparatus, the rear part of the frame element incorporates a self-adhesive item, for instance, a self-adhesive band.

According to another additional characteristic no according of the invention, the opening/window of the frame element is advantageously foreseen as a rectangular, square, circular or oval shape.

According to yet another additional characteristic no according of the invention, and to facilitate the movement of the closing means with regard to the frame element, at least a swivel joint is provided, mounted between such closing means and the frame element.

Also according to yet another additional characteristic no according of the invention, it is advantageous that at least one joint has been provided as a hinge.

Also according to yet another additional characteristic no according of the invention, it is advantageous that the device is provided as a single-block element, obtained, for instance by moulding, wherein at least one of the joints comprises a living hinge consisting of an area of flexible material of a lesser thickness.

Even according to yet another additional characteristic no according of the invention, the embodiment is very easy to manufacture when at least one joint is provided as a cord made of a flexible material arranged joining the frame element and the closing means.

Also according to another additional characteristic no according of the invention, it is advantageous that the closing means have been provided as a tilting lid.

Alternatively, and according to yet another additional characteristic of the invention, to facilitate the movement of the closing means with regard to the frame element, such frame element is provided as a guide rail, normally in the shape of a "C", with guiding rails at the longitudinal edges, while the closing means are provided as a sliding element coupled to the guiding rails of the frame element. In this case, to prevent that the closing means may go off the guiding rails of the frame element, such rails are provided with respective longitudinal slots wherein stop elements fixed to the closing means may slide.

According to the invention, its is advantageous that the closing means consist of a single piece, although such closing means may also be provided comprising two portions.

Also according to an additional characteristic no according of the invention, and to facilitate their manipulation by the user, it is advantageous that the closing means comprise a handling section, such as a flap or handle.

Additionally, according to another characteristic of the invention, and to ensure the locking of the closing means on the frame element, it is advantageous to provide a closing mechanism, such as a pressure mechanism, a snap-on mechanism, a magnetic lock mechanism, or any other similar one.

### Brief description of the drawings

Other characteristics and advantages of the present invention will become apparent from the following description and the attached drawings, that refer to non-limiting embodiments of the invention, and wherein the following has been represented:
Figure 1 schematically shows the layout of a device according to the invention, which has not been assembled yet on an electronic apparatus which incorporates a digital camera.
Figures 2 and 3 schematically show views of a first embodiment of the device no according to the invention, respectively showing the device in the opened position and a plan view of the frame element.
Figure 4 schematically shows an alternative embodiment of the device according to Figure 2.
Figures 5 and 6 respectively show the assembled and disassembled views of another two alternative embodiments of the device no according to the invention.
Figures 7 to 9 schematically show perspective views of other three alternative embodiments of the device no according to the invention.
Figures 10 and 11 respectively show two additional alternative embodiments of the device according to the invention.

### Detailed description of the preferred embodiments of the invention and examples that do not form part of the invention.

In the figures, like elements have been designated with the same reference number.

As it has been schematically shown in figure 1, the device according to the invention which has been generally designated by the numeral (1) has been provided as an accessory that may be firmly inserted on the body of an electronic apparatus (PC) over the lens (OB) of a digital camera which is incorporated into said electronic apparatus.

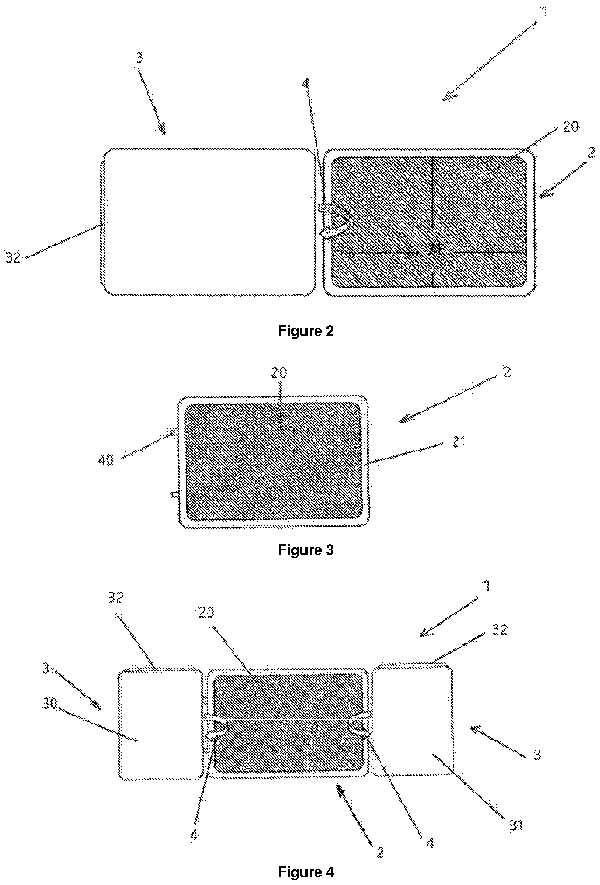

Referring now to Figure 2, it can be observed that the aforementioned device (1) comprises a frame element (2) and closing means (3) mounted on the frame element (2) by means of a swivel joint (4), so that the closing means may be moved to become closer to or more distant from the frame element.

Additionally, Figure 2 shows that the above-mentioned frame element (2) incorporates an opening/window (20) which determines an opening (AP) whose size is equal to o larger than the size of the lens (OB) of the digital camera incorporated into the electronic apparatus (PC). As it can be appreciated in figures 2 to 7, such opening/window (20) may be alternatively foreseen as a rectangular, square, circular or oval shape.

As the closing means (3) have been foreseen so that they are essentially opaque, the lens (OB) of the digital camera incorporated into the electronic apparatus (PC) may be covered/uncovered at the user's will, so that the capturing of pictures may be prevented or allowed, according to the user's preferences, without the need to disable the image capturing functionality of the camera.

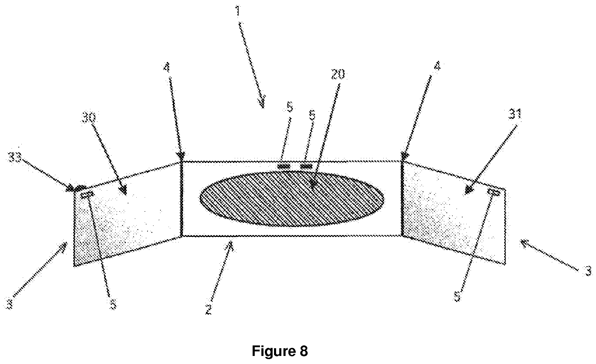

Continuing with reference to Figure 2, it can be appreciated that in this embodiment, the joint swivel (4) has been provided as a hinge and that the closing means (3) have been provided as a single element; but as it can be appreciated in figures 4 and 8, these closing means (3) have been alternatively provided with two separate portions (30, 31) that are complementary to each other, and they have been mounted on the frame, around two swivel joints (4).

As it can be appreciated in greater detail in figure 3, the rear part of the frame element (2), i.e., the part orientated towards the electronic apparatus (PC), comprises a fixing element (21) comprised by a self-adhesive band, so that the device may be easily fixed to the body of the electronic apparatus (PC) over the lens (OB) of the digital camera incorporated into said electronic apparatus.

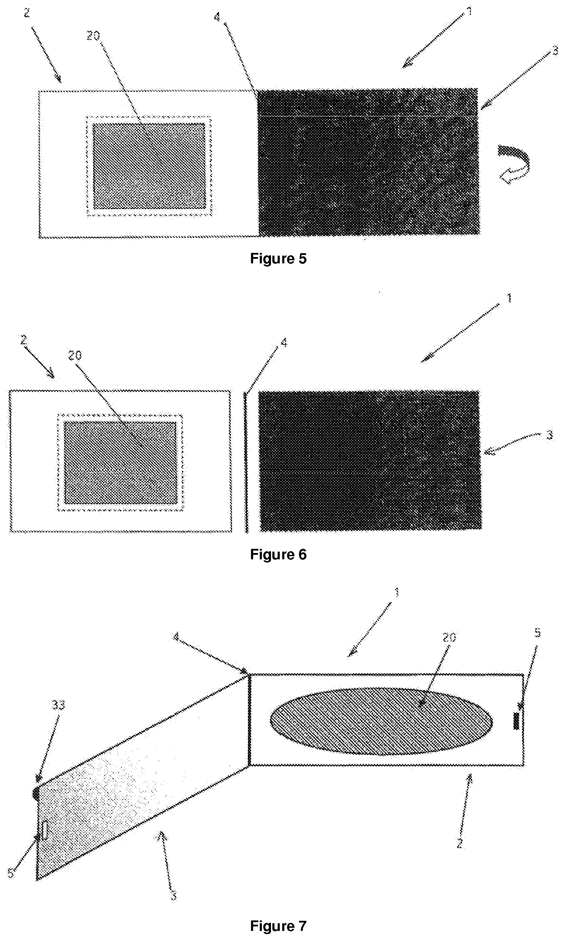

As it has been shown in figure 5, according to a comparative example the device (1) has been foreseen so that the frame element (2) and the closing means (3) form a single piece, conforming the at least one swivel joint (4) as a living hinge provided as an area wherein the material is flexible and has a lesser thickness. This configuration is especially suitable for the manufacturing of the device by moulding with thermoplastic materials. However, as it can be appreciated in figure 6, according to another comparative example, the swivel joint (4) of the device (1) has been provided as a cord made of a flexible material arranged joining the frame element (2) and the closing means (3).

Referring again to Figure 2, it can be appreciated that the closing means (3) or each one of their portions (30, 31), as shown in Figure 4, incorporate handling means, like a flange (32); however, as it can be seen in Figures 7 and 8, such handling means may be provided as a handle (33).

Additionally, and as it has also been shown in Figures 7 and 8, the device (1) comprises a closing mechanism (5) to ensure the locking of the frame element (2) and the closing means (3). This closing mechanism (5) may adopt the form of a pressure mechanism, a snap-on mechanism or a magnetic lock mechanism, although any other mechanisms may also be used.

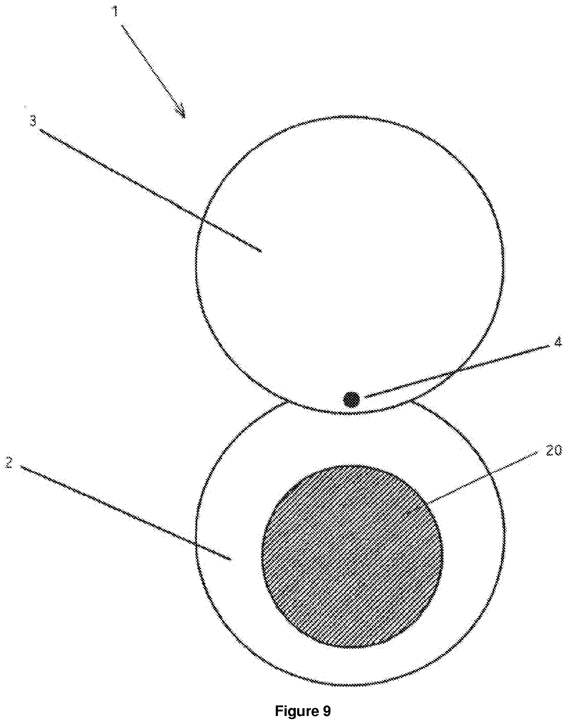

Referring now to Figure 9, it can be appreciated that the device (1) is alternatively provided with an essentially circular frame element (2), with an opening/window (20) which is also essentially circular, and closing means (3) like a tilting lid.

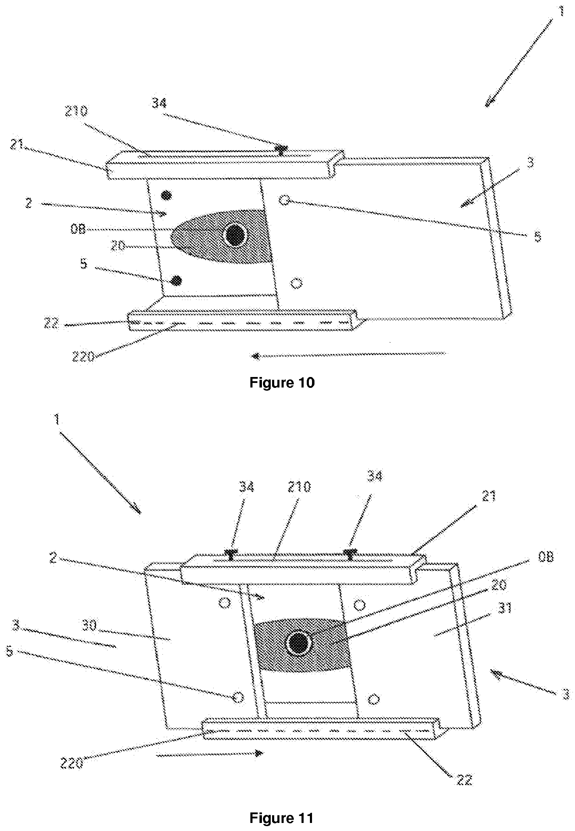

As it can be appreciated in figures 10 and 11, in an alternative embodiment of the device according to the invention, such device (1) comprises at one part a frame element (2), such frame element being provided a a guide rail, normally in the shape of a "C", with guiding rails (21, 22) at the longitudinal edges, while the closing means (3) are provided at the other part as a sliding element coupled to the guiding rails of the frame element.

Referring once again to figures 10 and 11, it can be appreciated that the guiding rails (21, 22) of the frame element (20) are provided with respective longitudinal slots (210, 220) wherein stops elements (34) fixed to the closing means (3) may slide, thus preventing the closing means from running off the guiding rails (21,22).

Furthermore, in Figures 10 and 11 it can also be appreciated that the device (1) also incorporates a closing mechanism (5) to ensure the locking between the frame element (2) and the closing means (3), such mechanism being embodied either as a pressure mechanism, a snap-on mechanism, a magnetic lock mechanism, or another similar mechanism.

As it can be appreciated in Figure 10, the closing means (3) comprise a single sliding element while, as it is shown in Figure 11, such closing means comprise two complementary portions (30, 31) of the sliding element, as it has been previously indicated in connection with other alternative embodiments of the invention.

As it will be easily understood by any person skilled in the art, all the above is a mere illustration of the preferred embodiments of the invention, so that changes of any kind may be introduced without departing from the scope of the claims.

## Claims

1. A device for covering the lens of digital cameras incorporated into electronic apparatus such as personal computers or similar devices with multimedia transmission capabilities,
wherein
such device (1) is provided as an accessory that can be tightly inserted on the body of the electronic apparatus (PC), over the lens of a digital camera (OB) incorporated in such electronic apparatus, wherein
such device (1) comprises:
- a frame element (2) wherein an opening/window (20) has been provided, which delimits an opening (AP) through which the lens of the digital camera (OB) may be observed when the device (1) is tightly inserted on the electronic apparatus; and
- closing means (3), comprised by an essentially opaque material, that are fitted on the frame element (2) so that they may switch between a closing position, covering the opening/window (20) and an opening position, uncovering such opening/window (20) and allowing that the camera lens may be covered/uncovered at the user's will;
wherein
- the frame element (2) is provided as a guide rail, normally in the shape of a "C", with guiding rails (21, 22) being provided at the longitudinal edges, while the closing means (3) are provided as a sliding element coupled to the guiding rails of the frame element; and
- the guiding rails (21, 22) of the frame element (20) are provided with respective longitudinal slots (210, 220) wherein stop elements (34) fixed to the closing means (3) may slide, to prevent that the closing means may go off the guiding rails (21, 22) of the frame element.
**characterized in that**
- the longitudinal slots (210, 220) go through the guiding rails (21, 22); and
- the stop elements (34) are adapted to passing through the respective longitudinal slot (210, 220) when these closing means are coupled to the guiding rails (21, 22).

2. A device according to claim 1, **characterized in that** the rear part of the frame element (2) incorporates a self-adhesive item (21), for instance, a self-adhesive band that adheres to the body of the electronic apparatus when the device (1) is tightly inserted on said electronic apparatus.

3. A device according at least to any of the previous claims, **characterised in that** the opening/window (20) of the frame element (2) is foreseen as a rectangular, square, circular or oval shape.

4. A device according at least to one of the above claims, **characterised in that** the closing means (3) consist of a single piece.

5. A device according at least to one of the above claims, **characterised in that** the closing means (3) consist of a pair of portions (30, 31).

6. A device according at least to one of the above claims, **characterised in that** a closing mechanism (5-5) has been provided to ensure the locking of the closing means (3) to the frame element (2), where said closing mechanism is provided preferentially as a magnetic lock mechanism.

## Patentansprüche

1. Eine Vorrichtung zum Abdecken der Objektive von in elektronischen Apparaten eingebauten Digitalkameras wie zum Beispiel Personal Computer oder ähnliche Geräte mit Multimedia Übertragungsfähigkeit,
wobei
diese Vorrichtung (1) als Zubehör vorgesehen ist, die fest am Körper des elektronischen Apparates (PC) über dem Objektiv der in diesem elektronischen Apparat eingebauten Digitalkamera (OB) eingefügt werden kann, wobei diese Vorrichtung (1) folgendes umfasst:
- Ein Rahmenelement (2), in dem eine Öffnung/Fenster (20) vorgesehen ist, die/das eine Öffnung (AP) definiert, durch die das Objektiv der Digitalkamera (OB) beobachtet werden kann, wenn die Vorrichtung (1) fest am elektronischen Apparat eingesetzt ist; und
- Ein Verschlussmittel (3), das aus einem im Wesentlichen undurchsichtigen Material besteht und am Rahmenelement (2) befestigt wird, so dass es zwischen einer Verschlussstellung, bei der es die Öffnung/das Fenster (20) verdeckt, und einer Öffnungsstellung, in der es diese Öffnung/ dieses Fenster (20) freigibt, bewegt werden kann und so dem Gebraucher erlaubt, das Objektiv nach Belieben zu verdecken / freizugeben;
wobei
- das Rahmenelement (2) als eine Führungsschiene vorgesehen ist, normalerweise mit einem "C"-Profil, mit Führungsschienen (21, 22) die an den Längskanten vorgesehen sind, während die Verschlusmittel (3) als Gleitelemente vorgesehen sind, die mit den Führungsschienen des Rahmenelements verbunden sind; und
- die Führungsschienen (21, 22) des Rahmenelements (20) mit den entsprechenden Längsspalten (210, 220) versehen sind, in denen an den Verschlussmitteln (3) befestigte Rastelemente (34) gleiten können, um zu verhindern, dass die Verschlussmittel aus den Führungsschienen (21, 22) des Rahmenelements entweichen;
**dadurch gekennzeichnet, dass**
- die Längsspalten (210, 220) durch die Führungsschienen (21, 22) gehen; und
- die Rastelemente (34) so angepasst sind, dass sie durch die entsprechenden Längsspalten (210, 220) gehen, wenn diese Verschlussmittel mit den Führungsschienen (21, 22) verbunden sind.

2. Eine Vorrichtung übereinstimmend mit Anspruch 1, **dadurch gekennzeichnet, dass** die Rückseite des Rahmenelements (2) mit einer selbstklebende Einheit (21) versehen ist, zum Beispiel ein selbstklebendes Band, das am Körper des elektronischen Apparats klebt, wenn die Vorrichtung (1) fest im besagten elektronischen Apparat eingesetzt ist.

3. Eine Vorrichtung übereinstimmend mindestens mit einem der vorhergehenden Ansprüche, **dadurch gekennzeichnet, dass** die Öffnung/ das Fenster (20) des Rahmenelements (2) mit einem rechteckigen, quadratischen, runden oder ovalen Profil versehen ist.

4. Eine Vorrichtung gemäss mindestens einem der obigen Ansprüche, **dadurch gekennzeichnet, dass** die Verschlussmittel (3) als Einzelteile vorgesehen sind

5. Eine Vorrichtung übereinstimmend mindestens mit einem der obigen Ansprüche, **dadurch gekennzeichnet, dass** die Verschlussmittel (3) zweiteilig sind (30, 31).

6. Eine Vorrichtung übereinstimmend mindestens mit einem der obigen Ansprüche, **dadurch gekennzeichnet, dass** ein Sperrmechanismus (5-5) vorgesehen ist, um das Einrasten des Verschlussmittels (3) am Rahmenelement (2) zu sichern, wo besagter Sperrmechanismus bevorzugt als ein magnetischer Sperrmechanismus vorgesehen ist.

## Revendications

1. Un dispositif pour couvrir l'objectif des appareils-photo numériques, intégré dans des appareils électroniques, tels que les ordinateurs personnels ou similaires avec des fonctionnalités de transmission multimédia,
où
ledit dispositif (1) est fourni en tant qu'accessoire qui peut être fermement inséré dans le corps de l'appareil électronique (PC), au-dessus de l'objectif du dispositif de l'appareil-photo numérique (OB) intégré audit appareil électronique, où
ledit dispositif (1) comprend :
- un cadre (2), portant une ouverture/hublot (20) qui délimite une ouverture (AP) au travers de laquelle l'objectif de l'appareil-photo numérique (OB), peut être observé lorsque le dispositif (1) est fermement inséré dans l'appareil électronique ; et
- des moyens de fermeture(3), constitués d'un matériau essentiellement opaque, montés sur le cadre (2) afin qu'ils puissent changer d'une position fermée, couvrant l'ouverture/hublot, (20) à une position ouverte, découvrant l'ouverture/hublot (20), et permettant que l'objectif de l'appareil-photo soit couvert/découvert selon la volonté de l'utilisateur ;
où
- le cadre (2) est fourni en tant que rail de guidage, normalement en forme de « C », les rails de guidage (21,22) étant fournis sur les bordures longitudinales, alors que les moyens de fermeture (3) sont fournis comme élément coulissant couplé aux rails de guidage du cadre ; et
- les rails de guidage (21,22) du cadre (20) sont fournis avec leurs rainures longitudinales respectives (210, 220), où les éléments de butée (34) fixés sur les moyens de fermeture (3) peuvent glisser afin d'éviter que ces moyens de fermeture dérapent des rails de guidage (21, 22) du cadre.
Ils sont **caractérisés par le fait que** :
- les rainures longitudinales (210, 220) passent à travers les rails de guidance (21, 22) ; et
- les éléments de butée (34) sont adaptés pour passer au travers de la rainure longitudinale respective (219, 220), lorsque les moyens de fermeture sont couplés aux rails de guidance (21, 22).

2. Un dispositif conformément à la Revendication 1, **caractérise par le fait que** la partie arrière du cadre (2) intègre un élément autoadhésif (21), par exemple, une bande autoadhésive qui adhère au corps de l'appareil électronique lorsque le dispositif (1) est inséré fermement audit appareil électronique.

3. Un dispositif, conformément au moins à une des revendications ci-dessus, **caractérisé par le fait que** l'ouverture/hublot (20) du cadre (2) sera conçu selon une forme rectangulaire, carrée, circulaire ou ovale.

4. Un dispositif, conformément au moins à une des revendications ci-dessus, **caractérisé par le fait que** les moyens de fermeture (3) comprennent une seule pièce.

5. Un dispositif, conformément au moins à une des revendications ci-dessus, **caractérisé par le fait que** les moyens de fermeture (3) comprennent une paire de parties (30, 31).

6. Un dispositif, conformément au moins à une des revendications ci-dessus, **caractérisé par le fait que** le mécanisme de fermeture (5-5) a été fourni pour garantir le verrouillage des moyens de fermeture(3) du cadre (2), où le dit mécanisme de fermeture es fourni de préférence comme un mécanisme de verrouillage magnétique.
